# EUROPEAN PATENT APPLICATION

(11) **EP 2 469 750 A1**
(43) Date of publication of application: **27.06.2012**
(21) Application number: 09848374.6
(22) Date of filing: 17.08.2009
(51) Int. Cl.: H04L 1/18

(54) **METHOD AND APPARATUS FOR DOWNLINK DATA TRANSMISSION CONTROL IN MULTI-HOP RELAY COMMUNICATION SYSTEM**

(71) Applicant: Alcatel Lucent, 75007 Paris (FR)
(72) Inventor: ZHAO, Qun, Shanghai 201206 (CN); LIU, Jimin, Shanghai 201206 (CN); ZHENG, Wu, Shanghai 201206 (CN)
(74) Representative: Behrens, Ralf Erik
(86) International application number: PCT/CN2009/073308
(87) International publication number: WO 2011/020233

(57) **Abstract**

In order to address the problem of RLC layer relaying in the prior art that downlink user data of a user equipment with an access through a relay station may be lost due to a handover, the invention proposes solutions of a method and apparatus for controlling downlink data transmission in a multi-hop relay communication system so that when a next-hop network device of a base station is a relay station, an RLC entity of the base station transmits an indication message to a PDCP entity of the base station, to trigger the PDCP entity of the base station to discard a PDCP SDU corresponding to at least one PDCP PDU, upon reception of a user equipment delivery acknowledgement message from the access relay station to acknowledge delivery of the at least one PDCP PDU to the user equipment. The access relay generates the user equipment delivery acknowledgement message upon reception from the user equipment of positive acknowledgement messages for all the RLC PDUs corresponding to the at least one PDCP PDU. Preferably status information on whether an RLC SDU has been acknowledged, which is buffered between the access relay station and the base station, can be synchronized implicitly.

## Description

### Field of the Invention

The present invention relates to the field of communication and in particular, to a method and an apparatus for controlling downlink data transmission in a multi-hop relay communication system.

### Background of the Invention

The multi-hop relaying approach has been adopted as a crucial technology to a next-generation mobile network in order to extend the coverage of a radio network and improve the throughput of a system and particularly the throughput of a user at the edge of a cell.

A seamless handover and a low delay are important factors to a guaranteed level of service during a handover. With introduction of a relay node, e.g., a Relay Station (RS), e.g., to a radio access network, how to perform an effective handover is an important issue because a specific layer at which the relay station operates, has to be addressed for example, whether the relay station operates at the network layer (i.e., layer 3 (L3) relaying) or at the data link layer (i.e., layer 2 (L2) relaying), etc. Data transmission in sequence is still required for a user equipment during a handover, so downlink data buffered in a source base station or the relay station has to be forwarded to a destination base station or the relay station. Transmission in sequence refers to a recipient submits data packets to an upper layer in the same order with the order that a sender receives the data packets from the upper layer and the sender receives the data packets from the upper layer in the same order with the order identified by the Sequence Numbers (SNs) of the data packets.

Firstly a single-hop scenario is considered in which the user equipment communicates directly with the base stations. Downlink data transmission in sequence is guaranteed at the Packet Data Convergence Protocol (PDCP) layer. A tunnel is set up between the source base station and the destination base station in preparation for a handover, and during the handover, the source base station forwards in sequence all the downlink PDCP layer SDUs or PDUs, which have not been acknowledged by the user equipment, to the destination base station and also forwards newly arriving data, received via the S1 interface (an interface between an MME/S-GW network administrator and the base station), to the destination base station until successful path switching, and then a Serving Gateway (S-GW) transmits the data directly to the destination base station. Therefore the destination base station can know the status of the downlink PDCP layer PDCP data packets identified by their SNs and will not lose any downlink service data.

However there is a different scenario when the user equipment communicates directly with the relay station instead of the base stations. Among numerous relay solutions, an RLC layer (an RLC residing at the layer 2) relay solution has gained popular attention. RLC layer relaying refers to the relay station being a layer 2 device and capable of providing RLC layer, MAC layer and PHY layer services. However for RLC layer relaying, downlink data transmission in sequence might be corrupted during a handover with use of the original 3GPP mechanism.

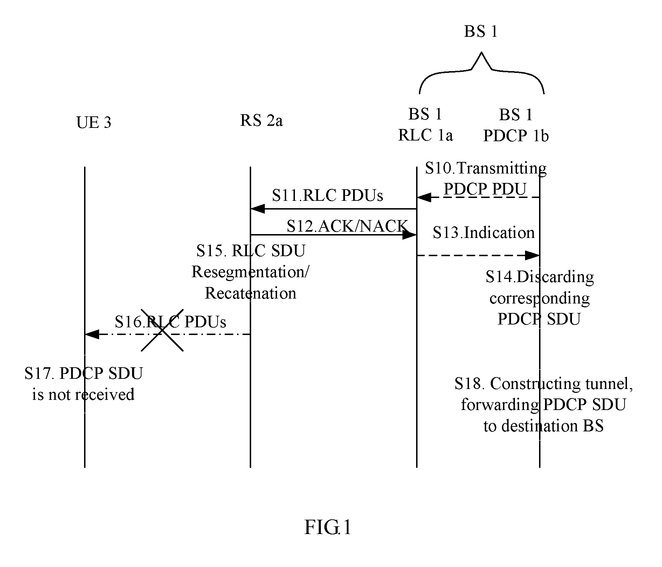

Fig.1 illustrates a schematic diagram of a downlink data transmission solution based on RLC layer relaying in the prior art. Fig.1 illustrates a scenario of hop-by-hop Automatic Repeat Request (ARQ) retransmission. In the step S10, a PDCP entity 1b in a base station 1 provides its lower layer RLC entity 1a with PDCP layer PDUs. Then the RLC entity 1a of the base station 1 segments or concatenates the PDCP layer PDUs by encapsulating them into one or more RLC PDUs and provides in the step S11 a peer entity in a relay station 2a, i.e., an RLC entity in the relay station 2a, with the one or more RLC PDUs. The relay station 2a transmits a corresponding positive acknowledgement message (ACK) or negative acknowledgement message (NACK) to the RLC entity 1a of the base station 1 in the step S12 upon reception of the one or more RLC PDUs, and the ARQ retransmission mechanism is known to those skilled in the art and therefore will not be repeated here. Upon reception of the ACKs to all the RLC PDUs corresponding to an entire RLC Service Data Unit (SDU), which are fed back from the relay station 2a, the RLC entity 1a of the base station provides in the step S13 the PDCP entity 1b of the base station 1 with an indication to instruct the PDCP entity 1b of the base station 1 to discard a PDCP SDU corresponding to the RLC SDU. Thus the PDCP entity 1b of the base station 1 discards the PDCP SDU corresponding to the RLC SDU in the step S14, and furthermore, if PDCP PDUs are buffered in the PDCP entity 1b of the base station 1, then the PDCP entity 1b of the base station 1 also discards PDCP PDUs corresponding to the RLC SDU in the step S14. Then the RLC entity of the relay station 2a re-segments or re-concatenates the received RLC SDUs in the step S15 and intends to transmit the corresponding RLC PDUs to a user equipment 3 in the step S16. However in Fig.1, the arrow of the step S16 is illustrated in a dash-dotted line with a crisscross drawn above, which indicates occurrence of a handover, that is, the relay station 2a transmits no RLC PDU to the user equipment without performing the step S16 really. Then a PDCP entity of the user equipment 3 receives no PDCP SDU in the step S17. As can be apparent from Fig.1, the PDCP entity 1b of the base station 1 has discarded the PDCP SDU in the step S14, thus resulting in a loss of the PDCP SDU during the handover. The foregoing handover includes an intra-cell handover (e.g., a handover of the user equipment between a base station and a relay station subordinated to the base station or a handover of the user equipment between different relay stations subordinated to the same base station) and an inter-cell handover (e.g., a handover of the user equipment between different base stations (or relay stations subordinated thereto)). In Fig.1, the base station 2a can re-segment or re-concatenate the RLC SDU upon reception of the RLC PDU from the base station 1 in the step 511, so the step S15 can alternatively take place before or between the steps S12 to S14.

Therefore when the user equipment 3 communicates directly with the relay station 2 and the hop-by-hop ARQ approach is adopted, the PDCP entity 1b of the base station 1 deletes the corresponding PDCP SDU when the PDCP SDU transmitted therefrom has been received successfully by the relay station, but the UE may have not received the PDCP SDU. If the UE were subjected to a handover, then all the PDCP SDUs which have been received successfully by the relay station but have not been received by the user equipment might have been lost.

Other relaying solutions, e.g., layer 3 relaying or relaying below the RLC layer, may be free of the foregoing problem but have their own drawbacks.

For layer 3 relaying, for example, the PDCP layer is active for the relay station, so the PDCP entity in the relay station guarantees row data transmission in sequence during a handover. The PDCP SDUs are buffered in a PDCP buffer of the relay station and therefore will not be lost during the handover. However the PDCP SDUs which have not been transmitted to the user equipment are forwarded to the destination base station through the tunnel with an entry thereto being the relay station, so the PDCP SDUs which have not been transmitted to the user equipment and new data are firstly transmitted from the source base station to the relay station and then transmitted through the tunnel from the relay station the destination base station, thus resulting in a waste of precious radio resources and also an increased period of time for the handover. Furthermore IP data packets have to be forwarded for layer 3 relaying, but there is a significant overhead of IP headers in some IP applications with small payloads, e.g., a VoIP service, messaging, interactive gaming, etc.

In another example, for relaying below the RLC layer, the RLC entity responsible for ARQ retransmission is absent in the relay station below the RLC layer, so end-to-end ARQ is performed between the base station and the user equipment. Therefore the base station will not discard the PDCP SDUs until the PDCP SDUs have been forwarded successfully to the user equipment and the base station has received the ACK messages fed back from the user equipment. However in an end-to-end ARQ retransmission scheme, the size of an ARQ window for relaying through a number K of hops is K times that in a single-hop ARQ retransmission scheme, so the existing SN length of an RLC PDU defined in the 3GPP Rel8 may be insufficient. Furthermore there is a limited downlink throughput of end-to-end ARQ retransmission because retransmission always commences from the base station; and moreover segmentation is performed at the RLC layer so that upper layer data packets can be segmented to the size of MAC layer data packets, and flexible scheduling might be absent without the RLC entity.

Furthermore the problem of an ARQ window with an excessive size may also be present in an end-to-end ACK and hop-by-hop NACK feedback mechanism, so the RLC SN length defined in the 3GPP Rel8 may be insufficient and the throughput of the network may be limited. Furthermore if an NACK message is lost, then possibly no RLC PDU will be retransmitted from the sender, so a mechanism has to be devised for status synchronization between the sender and the recipient when an NACK message is lost, thus resulting in a delay and a downlink data transmission overhead. Moreover the relay station has to maintain a mapping relationship between the RLC PDUs received by and the RLC PDUs transmitted from the relay station, thus resulting in an additional complexity and buffer space as required.

### Summary of the Invention

In order to address the foregoing problems in the prior art, the invention proposes a method and an apparatus.

According to a scheme of the invention, when a next-hop network device of a base station is a relay station, an RLC entity of the base station transmits an indication to a PDCP entity of the base station, to trigger the PDCP entity of the base station to discard a PDCP SDU corresponding to at least one PDCP PDU, upon reception of a user equipment delivery acknowledgement message from the access relay station to acknowledge delivery of the at least one PDCP PDU to the user equipment. The access relay generates the user equipment delivery acknowledgement message upon reception from the user equipment of positive acknowledgement messages for all the RLC PDUs corresponding to the at least one PDCP PDU. Preferably status information on whether an RLC SDU has been acknowledged, which is buffered between the access relay station and the base station, can be synchronized implicitly.

According to a first aspect of the invention, a method for controlling downlink data transmission in a base station is provideed, wherein the base station communicates with a user equipment via one or more relay stations, and the method includes the steps of: transmitting, at the radio link control layer, respective radio link control layer PDUs corresponding to one or more packet data convergence protocol layer PDUs to a next-hop relay station over a path to the user equipment; determining at the radio link control layer whether a user equipment delivery acknowledgement message is received, which is used to acknowledge that at least one of the one or more packet data convergence protocol layer PDUs has been delivered to the user equipment; and transmitting an indication at the radio link control layer to the packet data convergence protocol layer when the radio link control layer receives the user equipment delivery acknowledgement message, the indication being used to instruct the packet data convergence protocol layer to discard a buffered packet data convergence protocol layer SDU corresponding to the at least one packet data convergence protocol layer PDU .

According to a second aspect of the invention, a method for assisting a base station to control downlink data transmission in a relay station is provided, wherein the relay station is used to access a user equipment, and the method includes the steps of: transmitting respective radio link control layer PDUs corresponding to one or more packet data convergence protocol layer PDUs to the user equipment; determining whether positive acknowledgement messages for the respective radio link control layer PDUs corresponding to at least one of the one or more packet data convergence protocol layer PDUs are received from the user equipment; and transmitting an user equipment delivery acknowledgement message to the base station when the positive acknowledgement message is received, wherein the user equipment delivery acknowledgement message is used to acknowledge that the at least one packet data convergence protocol layer PDU has been delivered to the user equipment.

The scheme of the invention provides the following advantages:
1. A possible loss of downlink user data of a user equipment with an access through a relay station due to a handover can be addressed for RLC layer relaying;
2. Existing downlink data transmission in a hop-by-hop ARQ retransmission scheme will not be influenced;
3. Neither additional timing nor additional data transmission is required.
4. A protocol cost will be low due to an introduced acknowledgement message with a small size; and
5. No modification will be required at the side of a user equipment but only an existing relay link, i.e., signaling of a Un interface, will be modified to thereby achieve good backward compatibility.

### Brief Description of Drawings

With reference to the detailed description to the applied preferable embodiments in conjunction with the figures, the above aims, advantages and features of the present invention will be more apparent, wherein:
Fig.1 illustrates a schematic diagram of a downlink data transmission solution based on RLC layer relaying in the prior art;
Fig.2 illustrates a schematic diagram of a downlink data transmission solution based on RLC layer relaying according to an embodiment of the invention;
Fig.3 illustrates a schematic diagram of a transmission example of two RLC SDUs in a downlink data transmission solution based on RLC layer relaying according to an embodiment of the invention; and
Fig.4 illustrates a block diagram of an apparatus for a downlink data transmission solution based on RLC layer relaying according to an embodiment of the invention.

Wherein, same or similar reference numerals refer to same or similar apparatuses (modules) or step features.

### Detailed Description of Embodiments

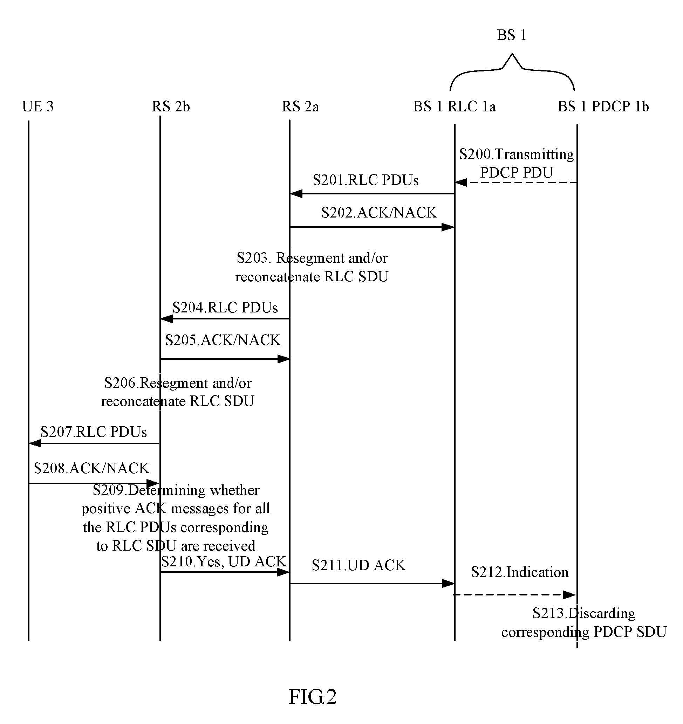

According to Fig.2, Fig 2 illustrates a schematic diagram of a downlink data transmission solution according to an embodiment of the invention. Fig.2 illustrates a base station 1 and two relay stations 2a and 2b, where the relay station 2a, which is an intermediate relay station, is a first-hop relay station in the downlink, and the relay station 2b, which is an access relay station, is a second-hop relay station in the downlink, i.e., a relay station closest to a user equipment 3. In the present embodiment, the relay station 2b communicates directly with the mobile station 3. Only two base stations are illustrated in the present embodiment for the sake of a convenient description, but one or more relay stations may be present between the base station and the user equipment. In Fig.2, there are illustrated a radio link control layer entity 1a and a packet data convergence protocol layer entity 1b in the base station 1. Those skilled in the art can appreciate that both the PDCP layer and the RLC layer belong to the data link layer (i.e., the layer 2 (L2)). Those skilled in the art can appreciate that the base station 1 can further include physical layer, IP layer and upper layer entities, and since these entities are less relevant to the invention, these and other entities are not illustrated in Fig.2. Particularly the PDCP entity 1b is located on top of the RLC entity 1a, and both the PDCP entity and the RLC entity are logic entities and can be implemented in software modules. A peer entity of the PDCP entity 1b of the base station 1 is located in the mobile station 3, and a peer entity of the RLC entity 1a of the base station 1 is located in the relay station 2a, the relay station 2b and the user equipment 3.

A flowchart of a method for the system according to the invention will be described below with reference to Fig.2. As illustrated in Fig.2, the PDCP entity 1b of the base station 1 transmits PDCP PDUs to the RLC entity 1a of the base station 1 in the step S200. Information interaction illustrated in the dotted line following the arrow in the step S200 is performed between the entities between the different layers in the base station. Specifically at the PDCP layer, the PDCP entity 1b of the base station 1 acquires data packets transported from the IP layer and performs header compression, for example, in the ROHC algorithm by encapsulating in sequence the IP data packets according to their transmission order, appending PDCP PDU headers to which the sequentially incrementing sequence numbers of PDCP PDUs are added in sequence and encrypting the data to finally generate the PDCP PDUs.

The RLC entity 1a of the base station 1 segments and/or concatenates the PDCP PDUs from an upper layer, i.e., the PDCP layer 1b, in sequence according to information from the MAC layer of the base station 1, e.g., the size of a Transmission Block (TB) indicated from the MAC layer, etc., and the order of the sequence numbers (SNs) of the PDCP PDUs to generate respective RLC PDUs in sequence corresponding to the one or more PDCP PDUs. The information from the MAC layer can be generated according to a radio resource allocated over a link between the base station 1 and the relay station 2a (e.g., a time-frequency resource allocated for the link, etc.) and a transmission characteristic of the link (e.g., a link quality, etc.) and/or priorities between different services. Then the RLC entity 1a of the base station 1 transmits the respective RLC PDUs corresponding to the one or more PDCP PDUs to a next-hop relay station over a path to the user equipment 3 in the step S201. In the present embodiment, the RLC entity 1a of the base station 1 transmits the respective RLC PDUs corresponding to the one or more PDCP PDUs to the RLC entity of the relay station 2a.

The PDCP entity 1b of the base station 1 can further buffer acquired PDCP SDUs. The buffering step may not have a substantial sequential relationship with the step of transmitting the RLC PDUs at the RLC layer to the relay station 2a. Firstly the PDCP entity 1b can transmit the PDCP PDUs to the RLC entity 1a, which in turn segments/concatenates the PDCP PDUs into one or more RLC PDUs transmitted to the UE, and then the PDCP entity 1b buffers the PDCP PDUs in sequence; or firstly the PDCP entity 1b buffers the PDCP SDUs in sequence and transmits the PDCP PDUs to the RLC entity 1a, which in turn segments/concatenates the PDCP PDUs into one or more RLC PDUs transmitted to the UE.

Then the RLC entity of the relay station 2a transmits ACKs corresponding to the respective RLC PDUs, transmitted from the RLC entity 1a of the base station 1, to the peer entity of the base station 1, i.e., the RLC entity 1a of the base station 1, in the step S202, and a specific ACK/NACK feedback process is the same as the steps in the prior art and therefore will not be repeated here.

Next the relay station 2a can re-segments and/or re-concatenates received one or more RLC SDUs from the RLC entity 1a of the base station 1 in sequence according to information from the MAC layer of the relay station 2a, e.g., the size of a Transmission Block (TB) indicated from the MAC layer of the relay station 2a, etc., to generate respective RLC PDUs in sequence corresponding to the one or more RLC SDUs in the step S203. The information from the MAC layer can be generated according to a radio resource allocated over a link between the relay station 2a and the relay station 2b (e.g., a time-frequency resource allocated for the link, etc.) and a transmission characteristic of the link (e.g., a link quality, etc.) and/or priorities between different services. Those skilled in the art can appreciate that the RLC entity of the relay station 2a segments the RLC SDUs by a different size from the size by which the RLC entity 1a of the relay station 1 segments the RLC SDUs because the allocated resource and/or the transmission characteristic of the radio link between the base station 1 and the relay station 2a is very likely to be different from the allocated resource and/or the transmission characteristic of the radio link between the relay station 2a and the relay station 2b.

Then the relay station 2a transmits the re-segmented-into and/or re-concatenated-into RLC PDUs corresponding to the one or more RLC SDUs to the relay station 2b in the step S204.

The RLC entity of the relay station 2b transmits ACKs/NACKs corresponding to the respective RLC PDUs, transmitted from the RLC entity of the relay station 2a, to the RLC entity of the relay station 2a in the step S205.

Then the relay station 2b re-segments and/or re-concatenates the received one or more RLC SDUs from the RLC entity of the relay station 2a in sequence according to information from the MAC layer of the relay station 2b, e.g., the size of a Transmission Block (TB) indicated from the MAC layer of the relay station 2b, etc., to generate respective RLC PDUs in sequence corresponding to the one or more RLC SDUs in the step S206.

Then the relay station 2b transmits the re-segmented-into and/or re-concatenated-into respective RLC PDUs corresponding to the one or more RLC SDUs to the user equipment 3 in the step S207.

Then the access relay station 2b receives ACKs/NACKs fed back from the user equipment 3 corresponding to the respective RLC PDUs transmitted from the RLC entity of the relay station 2b in the step S208.

The relay station 2b determines whether ACKs for the respective RLC PDUs corresponding to the RLC SDU(s) are received from the user equipment 3 (that is, the relay station 2b determines whether ACK messages for all the RLC PDUs corresponding to the RLC SDU(s) are received from the user equipment 3) in the step S209. An RLC header of each of the RLC PDUs includes an indication to indicate the number of RLC SDUs or RLC SDU segments included in a data portion of the RLC PDU and the end positions of the respective RLC SDUs or RLC SDU segments. The RLC entity of the relay station 2b can determine from the foregoing information when all the RLC PDUs corresponding to an entire RLC SDU are received.

When the relay station 2b determines in the step S210 that ACKs for the respective RLC PDUs corresponding to the RLC SDU(s) are received, the relay station 2b transmits a user equipment delivery acknowledgement message to the relay station 2a to acknowledge that the RLC SDU(s) has been delivered to the user equipment 3. As can be appreciated, the RLC SDU is equivalent to the PDCP PDU. Generally an RLC SDU is exchanged between an RLC entity and a PDCP entity and a PDCP PDU is exchanged between PDCP entities.

Then the relay station 2a transmits the user equipment delivery acknowledgement message to the RLC entity 1a of the base station 1 in the step S211.

Then the RLC entity 1a of the base station 1 transmits an indication to the PDCP entity 1b of the base station 1 to instruct the PDCP entity 1b to discard a buffered PDCP SDU(s) corresponding to the RLC SDU(s) (PDCP PDU(s)) upon reception of the user equipment delivery acknowledgement message in the step S212. Indication interaction illustrated in the dotted line following the arrow in the step S212 is performed between the entities between the different layers in the base station.

Then the PDCP entity 1b of the base station 1 discards the buffered PDCP SDU(s) corresponding to the RLC SDU(s) acknowledged by the user equipment delivery acknowledgement message in the step S213. Particularly the PDCP SDU is unencrypted pure data information, and the PDCP PDU is a data packet into which the PDCP SDU is encrypted. Since a data encryption algorithm may vary from one base station to another, PDCP SDUs are typically buffered in a base station, and a source base station transmits the unencrypted PDCP SDUs to a destination base station during a handover. Of course, when the PDCP SDU acknowledged by the user equipment delivery acknowledgement message is also buffered in the base station, the PDCP SDU acknowledged by the user equipment delivery acknowledgement message is further deleted from a buffer in the step S211.

The invention will further be described below with reference to the drawings according to an embodiment of the invention taking two RLC SDUs as an example.

Firstly the PDCP entity 1b of the base station 1 transmits two RLC SDUs, i.e., an RLC SDU1 and an RLC SDU2 respectively to the RLC entity 1a of the base station 1 in the step S300. Particularly as can be apparent, the sequence number of the RLC SDU1 is smaller than that of the RLC SDU2, so respective relay stations shall guarantee preceding in sequence of the RLC SDU1 to the RLC SDU2 throughout subsequent segmentation and concatenation operations of the respective relay stations. The RLC SDU1 is represented with oblique lines to be distinguished from the RLC SDU2.

The RLC entity 1a of the base station 1 segments and/or concatenates PDCP PDUs from an upper layer, i.e., the PDCP layer 1b of the base station 1, in sequence according to information from the MAC layer of the base station 1, e.g., the size of a Transmission Block (TB) indicated from the MAC layer, etc., and the order of the sequence numbers (SNs) of the PDCP PDUs to generate three RLC PDUs, i.e., P1, P2 and P3 respectively. That is, the RLC entity 1a of the base station 1 has a data portion of the RLC PDU P1 composed of a first segment of the RLC SDU1, concatenates a last segment of the RLC SDU1 and a first segment of the RLC SDU2 into a data portion of the RLC PDU P2 and has a data portion of the RLC PDU P3 composed of a last segment of the RLC SDU2. An RLC header of each of the RLC PDUs includes information indicating the length(s) of the respective RLC SDU segment(s) included in the data portion of the RLC PDU, i.e., a field of Length Indicator, and also information indicating whether a first byte of the data field of the RLC PDU corresponds to a first byte of the RLC SDU or whether a last byte of the data field of the RLC PDU corresponds to a last byte of the RLC SDU, i.e., a field of Framing Indicator (FI). Noted that the sequence number of the RLC SDU1 is smaller than that of the RLC SDU2, so the sequence number of the RLC PDU corresponding to the RLC SDU1 is smaller than that of the RLC PDU corresponding to the RLC SDU2. Reference can be made to the 3GPP TS 36.322 Rel-8 for details. Then the RLC entity 1a of the base station 1 transmits the RLC PDUS P1, P2 and P3 in sequence to the relay station 2a in the step S301.

Then the RLC entity of the relay station 2a transmits ACKs corresponding to the respective RLC PDUS P1, P2 and P3, transmitted from the RLC entity 1a of the base station 1, to the RLC entity 1a of the base station 1 after the relay station 2a verifies successful reception of P1, P2 and P3 through a CRC check or like in the step S302. For example, the relay station 2a can transmit ACK messages in a Stop-and-Wait (SAQ) ARQ scheme, a Go-Back-N (frames) ARQ scheme or a selective ARQ retransmission scheme.

Noted that the RLC entity of the relay station 2a may receive correctly the RLC PDUS P1, P2 and P3 from the peer RLC entity 1a of the base station 1 in an unexpected order. For example, the RLC entity of the relay station 2a firstly receives correctly the RLC PDUs P2 and P3 corresponding to the RLC SDU2, and the base station 1 retransmit the RLC PDU P1 due to a check error of the RLC PDU P1, so the relay station 2a then receives the RLC PDU P1 corresponding to the RLC SDU1. Therefore the RLC entity of the relay station 2a reorders the received RLC PDUs so that the reordered RLC PDUs are in a sequentially ascending order of their sequence numbers, that is, in the same order as the ascending order of the sequence numbers of the RLC SDUs, i.e., the sequence of the RLC PDUs P2 and P3. Of course, if the relay station 2a receives the RLC PDUs in the sequentially ascending order of the SNs of the RLC PDUs, then the foregoing reordering step may be omitted.

Next the relay station 2a segments and/or concatenates the sequentially arranged RLC PDUs from the RLC entity 1a of the base station 1 in sequence according to information from the MAC layer of the relay station 2a, e.g., the size of a Transmission Block (TB) indicated from the MAC layer, etc., to generate five RLC PDUs, i.e., P1', P2', P3', P4' and P5' respectively. That is, the RLC entity of the relay station 2a has a data portion of the RLC PDU P1' composed of the first segment of the RLC SDU1, a data portion of the RLC PDU P2' composed of a second segment of the RLC SDU1, a data portion of the RLC PDU P3' composed of the last segment of the RLC SDU1, a data portion of the RLC PDU P4' composed of the first segment of the RLC SDU2 and a portion of the RLC PDU P5' composed of the last segment of the RLC SDU2. Those skilled in the art can appreciate that the same RLC SDU1 and RLC SDU2 may be segmented by the RLC entity 1a of the base station into a different number of RLC PDUs from the number of RLC PDUs into which they are segmented by the RLC entity of the relay station 2a because a resource over a radio link between the base station 1 and the relay station 2a and a transmission characteristic of the link are different from a resource over a radio link between the relay station 2a and the relay station 2b and a transmission characteristic of the link.

Then the relay station 2a retransmits the re-segmented-into five RLC PDUs P1', P2', P3', P4' and P5' to the relay station 2b in the step 303.

Then the RLC entity of the relay station 2b transmits ACKs corresponding to the respective RLC PDUs P1', P2', P3', P4' and P5', transmitted from the RLC entity of the relay station 2a, to the RLC entity of the relay station 2a after the relay station 2b verifies successful reception of P1', P2', P3', P4' and P5' through a CRC check or like in the step 5304.

Then the relay station 2b segments and/or concatenates the sequentially arranged RLC PDUs from the RLC entity of the relay station 2a in sequence according to information from the MAC layer of the relay station 2b, e.g., the size of a Transmission Block (TB) indicated from the MAC layer, etc, to generate three RLC PDUs, i.e., P1", P2" and P3" respectively. That is, the RLC entity of the relay station 2b has a data portion of the RLC PDU P1" composed of the entire RLC SDU1, a data portion of the RLC PDU P2" composed of the first segment of the RLC SDU2 and a portion of the RLC PDU P3" composed of the last segment of the RLC SDU2. Therefore the relay station 2b transmits the re-segmented-into three RLC PDUs P1", P2" and P3 " to the user equipment 3.

Then in the step S306, for example, the user equipment 3 determines a check error of the RLC PDU P1" but no check error of the RLC PDUs P2" and P3". Therefore the RLC entity of the user equipment 3 transmits ACKs for P2" and P3" and an NACK for P1" to the RLC entity of the relay station 2b.

Then the RLC entity of the relay station 2b retransmits the RLC PDU P1" in the step S307.

Then the user equipment 3 determines from a check the correctness of the received RLC PDUP1" and the RLC entity of the user equipment 3 transmits an ACK for the RLC PDUP1" in the step S308.

In the invention, an implicit RLC SDU indicator can be adopted. That is, an explicit sequence number of an RLC PDU may not necessarily be included in a user equipment delivery message. For example, a list including information on whether the respective RLC SDUs have been acknowledged by a user equipment delivery message is stored at the RLC layer of the relay station 2b, and all the unacknowledged RLC SDUs are ordered in the list in a sequentially ascending order of their SNs. Furthermore the RLC SDUs are arranged in the same order that the PDCP SDUs are buffered at the PDCP layer 1b of the base station 1. A list in which the PDCP SDUs are buffered is maintained at the PDCP layer 1b of the base station 1 in the order that the IP packets are acquired from the upper layer of the PDCP layer of the base station, i.e., the IP layer, and also the PDCP PDUs transmitted from the PDCP layer are grouped in sequence at the RLC layer 1a of the base station to generate the RLC PDUs. Therefore the list of the base station 1 is in the same order and has the same starting position as in the relay station 2b. Therefore the sequence numbers of the RLC PDUs are in the same sequence as those of the PDCP PDUs although they are different. Therefore the information on whether the RLC SDUs have been delivered to the user equipment can be synchronized implicitly between the relay station 2b and the base station 1 without including the SNs of the RLC PDUs by defining the first RLC SDU in the list of the relay station 2b as the first RLC SDU that has not been acknowledged by a user equipment delivery message.

Specifically, for example, the relay station 2b firstly marks the corresponding RLC SDU1 and RLC SDU2 as not acknowledged for delivery to the user equipment, i.e., "UE Un-acknowledgement", upon reception of the RLC PDUs P1', P2', P3', P4' and P5' from the relay station 2a. Particularly the RLC SDU1 is the first unacknowledged PDCP PDU in the order of transmission from the base station and the RLC SDU2 is the second unacknowledged PDCP PDU in the order of transmission from the base station in the list maintained by the RLC. Then in the step S309, the relay station 2b acknowledges reception from the user equipment 3 of all the RLC PDUs corresponding to the RLC SDU1 and the RLC SDU2. That is, upon reception of the acknowledgement messages for the RLC PDUs P1", P2" and P3", the relay station 2b knows from the Framing Indication included in the header of the RLC PDU P1" that the first byte of the data portion of the RLC PDU P1" corresponds to the first byte of an RLC SDU and the last byte of the data portion of the RLC PDU P1" corresponds to the last byte of the RLC SDU, knows from the FI information included in the header of the RLC PDU P2" that the first byte of the data portion of the RLC PDU P2" corresponds to the first byte of an RLC SDU and the last byte of the data portion of the RLC PDU P2" corresponds to a byte of the RLC SDU other than the last byte, and knows from the FI information included in the header of the RLC PDU P3" that the first byte of the data portion of the RLC PDU P2" corresponds to a byte of an RLC SDU other than the first byte and the last byte of the data portion of the RLC PDU P3" corresponds to the last byte of the RLC SDU. That is, the RLC entity of the relay station 2b knows that the RLC PDU P1" corresponds to an entire RLC SDU and the data portions of the RLC PDU P2" and the RLC PDU P3" compose an entire RLC SDU. Therefore the RLC entity of the relay station 2b marks the RLC SDU1 and the RLC SDU2 as "Being Acknowledged for Delivery to User Equipment", e.g., "Being UE Acknowledged".

Then the RLC entity of the relay station 2b generates a user equipment delivery message (UD ACK) including the number of sequential PDCP PDUs in the order of transmission from the base station starting from the first unacknowledged PDCP PDU in the order of transmission from the base station, i.e., two. Then the relay station 2a transmits the UD ACK (2) to the RLC entity of the relay station 2a in the step S310, where 2 between the brackets represents the number of sequential PDCP PDUs in the order of transmission from the base station starting from the first unacknowledged PDCP PDU in the order of transmission from the base station, i.e., two. Furthermore the RLC entity of the relay station 2b marks the RLC SDU1 and the RLC SDU2 as "Acknowledged for Delivery to User Equipment", e.g., "UE Acknowledged".

Then the relay station 2a forwards the UD ACK (2) to the RLC entity 1a of the base station 1 in the step S311.

Then the RLC entity of the base station 1 transmits an indication to the PDCP entity 1b of the base station 1 to instruct the PDCP entity 1b to discard the buffered first two PDCP SDUs upon reception of the user equipment delivery acknowledgement message in the step S312.

Then the PDCP entity 1b of the base station 1 discards the buffered PDCP SDUs corresponding to the first two PDCP PDUs acknowledged by the user equipment delivery acknowledgement message in the step S313. If the first two PDCP PDUs are buffered in the base station, then the base station will further delete the corresponding PDCP PDUs.

The UD ACK message in the forgoing embodiment indicates that the first K RLC SDUs have been acknowledged for delivery to the user equipment. In a variant of the embodiment, the format of the UD ACK message can be devised so that the UD ACK message will not carry any information on the number of sequential RLC SDUs acknowledged for delivery to the user equipment, that is, the UD ACK message indicates that the relay station 2b feeds back a user equipment delivery acknowledgement message only for the first unacknowledged RLC SDU message in the list at a time. Still taking the scenario described above as an example, the relay station 2b feeds back the UD ACK message to the relay station 2a immediately upon reception of the ACK message for P1" corresponding to the RLC SDU1 to indicate that the first one of the unacknowledged RLC SDUs in the UD ACK message has been acknowledged. Correspondingly the PDCP layer 1b of the base station 1 deletes the buffered first PDCP SDU.

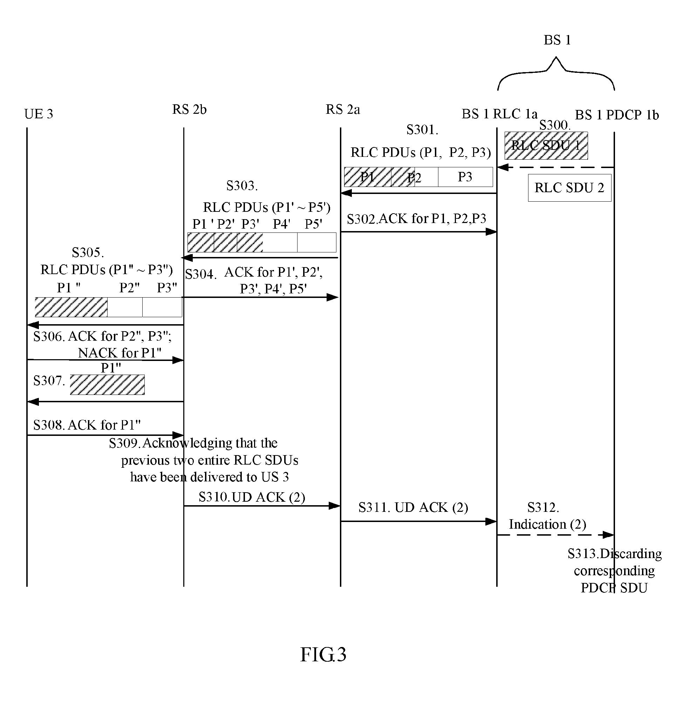

As can be appreciated, the foregoing implicit indicator can save an overhead of signaling because some bytes are typically occupied for the sequence numbers of RLC PDUs, but it shall be noted that it shall be ensured for the foregoing implicit indicator that respective RLC PDUs corresponding to a first RLC SDU have been received successfully by the user equipment. Referring to Fig.3, although the user equipment 3 has received successfully all the RLC PDUs P2" and P3" corresponding to the RLC SDU2 and fed back the corresponding ACKs in the step 306, it shall be ensured due to the implicit indicator that the UD ACK message be fed back also in the order that the base station transmits the RLC SDUs, and therefore the base station 2b will not feed any UD ACK message back to the base station until the ACK messages for all the RLC PDUs corresponding to the RLC SDU1 are received.

In view of this, the form of a bitmap can be adopted in a variant of the embodiment, for example, the relay station 2b receives ACKs for all the RLC PDUs corresponding to the RLC SDU2 and an NACK for the RLC PDU corresponding to the RLC SDU1 from the user equipment 3 and then can set a first bit to 0 and a second bit to 1 in the bitmap to indicate no reception of a UD ACK for the SDU1 but reception of a UD ACK for the SDU2 instead of transmitting a UD ACK only after ACK messages for all the RLC PDUs corresponding to the RLC SDU1 are received.

Of course, the relay station 2b can transmit a UD ACK message represented otherwise, for example, through Run-Length Encoding (RLE), etc., instead of in a bitmap or an implicit indicator.

For a handover, a tunnel shall be set up between a source base station, e.g., the base station 1, etc., and a destination base station. The PDCP entity 1b of the base station 1 will transmit all the PDCP SDUs, which are not indicated by the RLC entity 1a of the base station 1 as acknowledged for successful delivery, to the PDCP entity of the destination base station. For a scenario in which the user equipment has an access through the relay station, the RLC entity 1a of the base station 1 will transmit an indication to the PDCP entity 1b of the base station 1 to indicate successful delivery of a PDCP PDU only after a user equipment delivery acknowledgement message is received from the access relay 2b, and only then the PDCP entity 1b of the base station 1 will discard a corresponding PDCP SDU. Therefore status information in the PDCP entity 1b of the base station on whether user data is received successfully by the user equipment is accurate due to synchronization thereof with the status of the user equipment, thereby avoiding a loss of the data during a handover in the prior art because the base station 1 might discard the data at the PDCP layer prior to delivery to the user equipment. Therefore transmission in sequence can be guaranteed during the handover.

Apparently if a handover takes place between two base stations subordinated to the same base station or between a relay station and a base station to which the relay station is subordinated, it is not necessary to set up any tunnel because source and destination base stations are the same one. The invention can be equally applicable to this scenario.

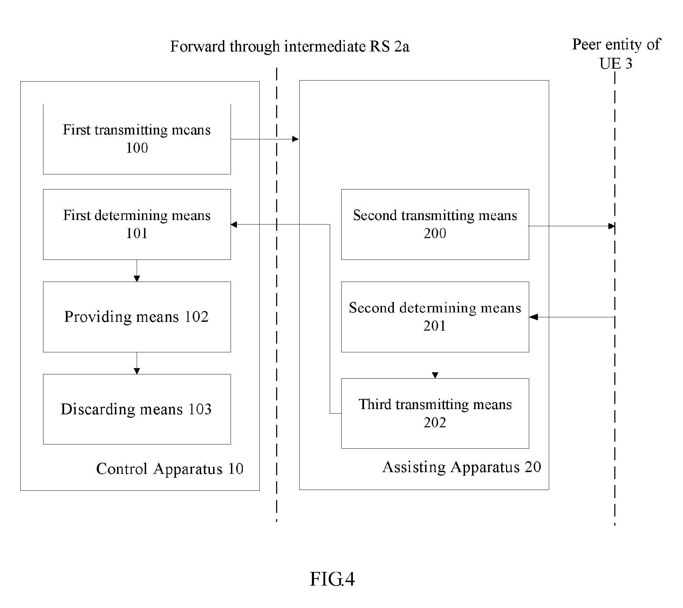

Fig.4 illustrates a block diagram of an apparatus according to an embodiment of the invention. Particularly the control apparatus 10 is located in the base station 1. The control apparatus 10 includes a first transmitting means 100, a first determining means 101, a providing means 102 and a discarding means 103. An assisting apparatus 20 is located in the relay station 2b. The assisting apparatus 20 includes a second transmitting means 200, a second determining means 201 and a third transmitting means 202.

The PDCP entity 1b of the base station 1 transmits PDCP PDUs to the RLC entity 1a of the base station 1. Specifically at the PDCP layer, the PDCP entity 1b of the base station 1 acquires data packets transported from the IP layer and performs header compression, for example, in the ROHC algorithm by encapsulating in sequence the IP data packets according to their transmission order, appending PDCP PDU headers to which the sequentially incrementing sequence numbers of PDCP PDUs are added in sequence and encrypting the data to finally generate the PDCP PDUs.

The RLC entity 1a of the base station 1 segments and/or concatenates the PDCP PDUs from an upper layer, i.e., the PDCP layer 1b, in sequence according to information from the MAC layer of the base station 1, e.g., the size of a Transmission Block (TB) indicated from the MAC layer, etc., and the order of the sequence numbers (SNs) of the PDCP PDUs to generate respective RLC PDUs in sequence corresponding to the one or more PDCP PDUs. The information from the MAC layer can be generated according to a radio resource allocated over a link between the base station 1 and the relay station 2a (e.g., a time-frequency resource allocated for the link, etc.) and a transmission characteristic of the link (e.g., a link quality, etc.) and/or priorities between different services. Then the first transmitting means 100 transmits the respective RLC PDUs corresponding to the one or more PDCP PDUs to a next-hop relay station over a path to the user equipment 3. In the present embodiment, the first transmitting means 100 transmits the respective RLC PDUs corresponding to the one or more PDCP PDUs to the RLC entity of the relay station 2a.

The PDCP entity 1b of the base station 1 can further include a memory for buffering acquired PDCP SDUs. The step of buffering in the memory may not have a substantial sequential relationship with the step of transmitting the RLC PDUs from the first transmitting means 100. Firstly the PDCP entity 1b can transmit the PDCP PDUs to the RLC entity 1a, which in turn segments/concatenates the PDCP PDUs into one or more RLC PDUs transmitted to the UE, and then the PDCP PDUs are buffered in the memory in sequence; or firstly the PDCP SDUs are buffered in the memory in sequence, and the PDCP entity 1b the PDCP PDUs to the RLC entity 1a, which in turn segments/concatenates the PDCP PDUs into one or more RLC PDUs transmitted to the UE.

Then the relay station 2b receives the RLC PDUs forwarded from the relay station 2a. The second transmitting means 200 in the relay station 2b can re-segments and/or re-concatenates received one or more RLC SDUs from the RLC entity of the relay station 2a in sequence according to information from the MAC layer of the relay station 2b, e.g., the size of a Transmission Block (TB) indicated from the MAC layer of the relay station 2b, etc., to generate respective RLC PDUs in sequence corresponding to the one or more RLC SDUs. The information from the MAC layer can be generated according to a radio resource allocated over a link between the relay station 2a and the relay station 2b (e.g., a time-frequency resource allocated for the link, etc.) and a transmission characteristic of the link (e.g., a link quality, etc.) and/or priorities between different services.

Then the second transmitting means 200 transmits the re-segmented-into and/or re-concatenated-into respective RLC PDUs corresponding to the one or more RLC SDUs to the user equipment 3.

Then the access relay station 2b receives ACKs/NACKs fed back from the user equipment 3 corresponding to the respective RLC PDUs transmitted from the RLC entity of the relay station 2b.

The second determining means 201 determines whether ACKs for the respective RLC PDUs corresponding to the RLC SDU(s) are received from the user equipment 3, that is, the second determining means 201 determines whether ACK messages for all the RLC PDUs corresponding to the RLC SDU(s) are received from the user equipment 3. An RLC header of each of the RLC PDUs includes an indication to indicate the number of RLC SDUs or RLC SDU segments included in a data portion of the RLC PDU and the end positions of the respective RLC SDUs or RLC SDU segments. The second determining means 201 can determine from the foregoing information when all the RLC PDUs corresponding to an entire RLC SDU are received.

When the second determining means 201 determines that ACKs for the respective RLC PDUs corresponding to the RLC SDU(s) are received, the third transmitting means 202 transmits a user equipment delivery acknowledgement message to the relay station 2a to acknowledge that the RLC SDU(s) has been delivered to the user equipment 3. As can be appreciated, the RLC SDU is equivalent to the PDCP PDU. Generally an RLC SDU is exchanged between an RLC entity and a PDCP entity and a PDCP PDU is exchanged between PDCP entities. Then the relay station 2a transmits the user equipment delivery acknowledgement message to the RLC entity 1a of the base station 1.

Then after the first determining means 101 receives the user equipment delivery acknowledgement message, that is, determines reception of the user equipment delivery acknowledgement message, the providing means 102 transmits an indication to the PDCP entity 1b of the base station 1 to instruct the PDCP entity 1b to discard a buffered PDCP SDU(s) corresponding to the RLC SDU(s) (PDCP PDU(s)), that is,. Indication interaction illustrated in the dotted line following the arrow in the step S212 is performed between the entities between the different layers in the base station.

Then the discarding means 103 discards the buffered PDCP SDU(s) corresponding to the RLC SDU(s) acknowledged by the user equipment delivery acknowledgement message. Particularly the PDCP SDU is unencrypted pure data information, and the PDCP PDU is a data packet into which the PDCP SDU is encrypted. Since a data encryption algorithm may vary from one base station to another, PDCP SDUs are typically buffered in a base station, and a source base station transmits the unencrypted PDCP SDUs to a destination base station during a handover. Of course, when the PDCP SDU acknowledged by the user equipment delivery acknowledgement message is also buffered in the base station, the discarding means 103 further discards the PDCP SDU acknowledged by the user equipment delivery acknowledgement message from the buffer.

The embodiments of the invention have been described above, but the invention will not be limited to any specific system, apparatus or protocol, and those skilled in the art can make various modifications or variations without departing from the spirit of the invention.

Those ordinarily skilled in the art can appreciate and make other modifications to the disclosed embodiments upon reviewing the description, the disclosure, the drawings and the appended claims. In the claims, the term "comprising/comprises" will not preclude another element(s) and step(s), and the term "a/an" will not preclude plurality. In a practical application of the invention, an element can perform the functions of a plurality of technical features recited in a claim. Any reference numeral in the claims will not be construed as liming the scope of the invention.

## Claims

1. A method for controlling downlink data transmission in a base station, wherein the base station communicates with a user equipment via one or more relay stations, and the method comprises the steps of:
A. transmitting, at the radio link control layer, respective radio link control layer PDUs corresponding to one or more packet data convergence protocol layer PDUs to a next-hop relay station over a path to the user equipment;
B. determining at the radio link control layer whether a user equipment delivery acknowledgement message is received, which is used to acknowledge that at least one of the one or more packet data convergence protocol layer PDUs has been delivered to the user equipment; and
C. transmitting an indication at the radio link control layer to the packet data convergence protocol layer when the radio link control layer receives the user equipment delivery acknowledgement message, the indication being used to instruct the packet data convergence protocol layer to discard a buffered packet data convergence protocol layer SDU corresponding to the at least one packet data convergence protocol layer PDU.

2. The method according to claim 1, wherein further comprising: after the step C,
D. discarding at the packet data convergence protocol layer the buffered corresponding packet data convergence protocol layer SDU according to the indication.

3. The method according to claim 2, wherein the packet data convergence protocol layer SDU corresponding to the one or more packet data convergence protocol layer PDUs is buffered at the packet data convergence protocol layer in a transmission order at the IP layer, and the step A further comprises:
- transmitting, at the radio link control layer, the respective radio link control layer PDUs corresponding to the one or more packet data convergence protocol layer PDUs sequentially to the user equipment according to the transmission order;
the user equipment delivery acknowledgement message is used to acknowledge that a first unacknowledged packet data convergence protocol layer PDU according to the transmission order or a plurality of sequential packet data convergence protocol layer PDUs according to the transmission order starting from the first unacknowledged packet data convergence protocol layer PDU according to the transmission order have been delivered to the user equipment; and
the step D further comprises:
- discarding the packet data convergence protocol layer SDU corresponding to the first packet data convergence protocol layer PDU or the sequential packet data convergence protocol layer PDUs.

4. The method according to claim 1 or 2, wherein the user equipment delivery acknowledgement message is represented in the form of a bitmap with respective bits representing respectively whether the respective packet data convergence protocol layer PDUs have been delivered to the user equipment.

5. The method according to any one of claims 1 to 4, wherein the communication between the base station and the user equipment uses hop-by-hop Automatic Repeat Request retransmission mechanism.

6. A method for assisting a base station to control downlink data transmission in a relay station, wherein the relay station is used to access a user equipment, and the method comprises:
a. transmitting respective radio link control layer PDUs corresponding to one or more packet data convergence protocol layer PDUs to the user equipment;
b. determining whether positive acknowledgement messages for the respective radio link control layer PDUs corresponding to at least one of the one or more packet data convergence protocol layer PDUs are received from the user equipment; and
c. transmitting a user equipment delivery acknowledgement message to the base station when the positive acknowledgement message is received, wherein the user equipment delivery acknowledgement message is used to acknowledge that the at least one packet data convergence protocol layer PDU has been delivered to the user equipment.

7. The method according to claim 6, wherein the step c further comprises:
- determining whether the positive acknowledgement messages correspond respectively to the respective radio link control layer PDUs of a first unacknowledged packet data convergence protocol layer PDU according to a base station transmission order ,or to the respective radio link control layer PDUs of a plurality of sequential packet data convergence protocol layer PDUs according to the base station transmission order starting from the first unacknowledged packet data convergence protocol layer PDU according to the base station transmission order; and
transmitting the user equipment delivery acknowledgement message when either of the above correspondence relationships is satisfied, wherein the user equipment delivery acknowledgement message is used to acknowledge that the first packet data convergence protocol layer PDU or the sequential packet data convergence protocol layer PDUs have been delivered to the user equipment.

8. The method according to claim 7, wherein the user equipment delivery acknowledgement message comprises the number of the pluarity of sequential packet data convergence protocol layer PDUs when the positive acknowledgement messages correspond to the pluarity of sequential packet data convergence protocol layer PDUs.

9. The method according to claim 6, wherein the user equipment delivery acknowledgement message is represented in the form of a bitmap with respective bits representing respectively whether the respective packet data convergence protocol layer PDUs have been delivered to the user equipment.

10. A control apparatus for controlling downlink data transmission in a base station, wherein the base station communicates with a user equipment via one or more relay stations, and the control apparatus comprises:
a first transmitting means, for transmitting, at the radio link control layer, respective radio link control layer PDUs corresponding to one or more packet data convergence protocol layer PDUs to a next-hop relay station over a path to the user equipment;
a first determining means, for determining at the radio link control layer whether a user equipment delivery acknowledgement message is received, which is used to acknowledge that at least one of the one or more packet data convergence protocol layer PDUs has been delivered to the user equipment; and
a providing means, for transmitting an indication at the radio link control layer to the packet data convergence protocol layer when the radio link control layer receives the user equipment delivery acknowledgement message, the indication being used to instruct the packet data convergence protocol layer to discard a buffered packet data convergence protocol layer SDU corresponding to the at least one packet data convergence protocol layer PDU.

11. The control apparatus according to claim 10, further comprising:
a discarding means, for discarding at the packet data convergence protocol layer the buffered corresponding packet data convergence protocol layer SDU according to the indication.

12. The control apparatus according to claim 11, wherein the packet data convergence protocol layer SDU corresponding to the one or more packet data convergence protocol layer PDUs is buffered at the packet data convergence protocol layer in a transmission order at the IP layer, and the first transmitting means is further used for transmitting, at the radio link control layer, the respective radio link control layer PDUs corresponding to the one or more packet data convergence protocol layer PDUs sequentially to the user equipment according to the transmission order; and
the user equipment delivery acknowledgement message is used to acknowledge that a first unacknowledged packet data convergence protocol layer PDU according to the transmission order or a plurality of sequential packet data convergence protocol layer PDUs according to the transmission order starting from the first unacknowledged packet data convergence protocol layer PDU according to the transmission order have been delivered to the user equipment; and the discarding means is further used for discarding the packet data convergence protocol layer SDU corresponding to the first packet data convergence protocol layer PDU or the sequential packet data convergence protocol layer PDUs.

13. The control apparatus according to claim 10 or 11, wherein the user equipment delivery acknowledgement message is represented in the form of a bitmap with respective bits representing respectively whether the respective packet data convergence protocol layer PDUs have been delivered to the user equipment.

14. A control apparatus for assisting a base station to control downlink data transmission in a relay station, wherein the relay station is used to access a user equipment, and the control apparatus comprises:
a second transmitting means, for transmitting respective radio link control layer PDUs corresponding to one or more packet data convergence protocol layer PDUs to the user equipment;
a second determining means, for determining whether positive acknowledgement messages for the respective radio link control layer PDUs corresponding to at least one of the one or more packet data convergence protocol layer PDUs are received from the user equipment; and
a third transmitting means, for transmitting a user equipment delivery acknowledgement message to the base station when the positive acknowledgement message is received, wherein the user equipment delivery acknowledgement message is used to acknowledge that the at least one packet data convergence protocol layer PDU has been delivered to the user equipment.

15. The control apparatus according to claim 14, wherein the third transmitting means further comprises:
- a third determining means for determining whether the positive acknowledgement messages correspond respectively to the respective radio link control layer PDUs of a first unacknowledged packet data convergence protocol layer PDU according to a base station transmission order ,or to the respective radio link control layer PDUs of a plurality of sequential packet data convergence protocol layer PDUs according to the base station transmission order starting from the first unacknowledged packet data convergence protocol layer PDU according to the base station transmission order; and
the third transmitting means transmits the user equipment delivery acknowledgement message when either of the above correspondence relationships is satisfied, wherein the user equipment delivery acknowledgement message is used to acknowledge that the first packet data convergence protocol layer PDU or the sequential packet data convergence protocol layer PDUs have been delivered to the user equipment.
